Europäisches Patentamt

(19) European Patent Office

Office européen des brevets

(11) Publication number: **0 439 277 A1**

(12) **EUROPEAN PATENT APPLICATION**

(21) Application number: 91300352.1

(22) Date of filing: 17.01.91

(51) Int. Cl.⁵: **H01B 7/28**, G02B 6/44

(30) Priority: 23.01.90 US 468559

(43) Date of publication of application:
31.07.91 Bulletin 91/31

(84) Designated Contracting States:
DE DK FR GB

(71) Applicant: AMERICAN TELEPHONE AND
TELEGRAPH COMPANY
550 Madison Avenue
New York, NY 10022 (US)

(72) Inventor: Arroyo, Candido J.
3641 Wilson Cove Court
Lithonia, Georgia 30058 (US)
Inventor: Paucke, Walter J.
1684 Brantford Drive
Tucker, Georgia 30084 (US)

(74) Representative: Johnston, Kenneth Graham et
al
AT&T (UK) LTD. AT&T Intellectual Property
Division 5 Mornington Road
Woodford Green Essex, IG8 OTU (GB)

(54) Communications cable having microbial resistant water blocking provisions.

(57) A communications cable (20) includes water blocking provisions which are microbial resistant. The water blocking provisions include a microbial resistant water blocking member (35) comprising a laminate which includes two tapes (37-37) with a superabsorbent powder (40) therebetween. Advantageously, the superabsorbent powder on contact with moisture swells to block further intrusion of moisture and to prevent its movement longitudinally within the cable. The tapes of the laminate may be non-cellulosic such as for example a spunbonded polyester material which has suitable tensile strength and which has a relatively high porosity and further which prevents the growth of fungus. An adhesive system (42) included in the laminate is sufficient to hold together the tapes and and the powder without inhibiting swelling of the powder on contact with water.

EP 0 439 277 A1

**FIG. 3**

**FIG. 5**

# COMMUNICATIONS CABLE HAVING MICROBIAL RESISTANT WATER BLOCKING PROVISIONS

## Technical Field

This invention relates to a communications cable having microbial resistant water blocking provisions.

## Background of the Invention

In the cable industry, it is well known that changes in ambient conditions lead to differences in vapor pressure between the inside and the outside of a plastic cable jacket. This generally operates to diffuse moisture in a unidirectional manner from the outside of the cable to the inside of the cable. Eventually, this will lead to an undesirably high moisture level inside the cable,. which may have a detrimental effect on the transmission characteristics of the cable. Also, water may enter the cable because of damage to the cable which compromises its integrity.

Although the presence of water itself within an optical fiber cable is not detrimental to its performance, passage of the water along the cable interior to connection points or terminals or associated equipment may cause problems and should be prevented. Further, in some climates, the development of ice within an optical fiber cable may have a crushing influence on the optical fibers in the core which may affect adversely the attenuation thereof.

In the prior art, various techniques have been used to prevent the ingress of water through the sheath system of a cable and into the core. For example, a metallic shield which often times is used to protect a cable against electromagnetic interference is provided with a sealed longitudinal seam. However, because lightning strikes may cause holes in the metallic shield, it is not uncommon to include additional provisions for preventing the ingress of water into the core. Filling materials have been and are being used to fill cable cores and to coat portions of cable sheath systems to prevent the movement longitudinally thereof of any water which enters the cable. However, the application of a filling material to a cable core and to sheath components during cable manufacturing presents some housekeeping problems and inhibits somewhat line speeds because of the need to fill carefully interstices of the core.

Presently, many commercially available cables also include a water swellable tape. The tape is used to prevent the travel of water through the sheath system and into the core as well as its travel longitudinally along the cable to closures and termination points, for example. Such a tape generally is laminated, including a water swellable powder which is trapped between two cellulosic tissues.

A problem which has surfaced as the result of using water blocking tapes relates to microbic growth.

The use of tissue-based tapes for water blocking purposes may lead to the growth of fungus. Microbic growth is not desired because it may affect adversely polymeric materials such as by the removal of plasticizers, modifiers and lubricants which result in changes in physical properties and deterioration of electrical properties, for example. Desirably, cables should be free of microbic growth and hence of materials which may engender such growth.

What is needed and what does not appear to be available in the marketplace is a microbial resistant water blocking member, preferably tape-like, which is relatively thin and relatively inexpensive. Such a water blocking member should be one which is compressible and which has acceptable tensile properties. Because in some optical fiber cables, the water blocking member is engaged by helically wound metallic strength members, it should be able to conform to the configurations of those members and to allow those members to become embedded therein without destroying the water blocking effectiveness. If the water blocking member has this capability, commonly used strength member wires will not move about and will provide torsional stability from layer to layer. On the other hand, if the water blocking member does not have this capability and if all the wires were to assume positions on one portion of the periphery, the cable would not be balanced torsionally and would be very difficult to bend.

Care also must be taken to avoid problems caused by what is referred to as bleed-through of molten plastic jacketing material. With a water blocking member comprised of a highly porous substrate, the greater the line speed the greater the flow of the molten plastic material into the substrate and the more difficult it becomes to strip the jacket to expose the core. As a result, the use of a highly porous water blocking member may severely limit the line speed.

What is needed and what seemingly is not available in the prior art is a cable which includes a microbial resistant water blocking member. The sought after member should be one which is relatively low in cost, which is easily incorporated into the cable design and which is easily handled. Also, it should be compressible and should have a suitable porosity.

## Summary of the Invention

The foregoing problems of the prior art have been overcome by the communications cable of this invention. A communications cable comprises a core comprising at least one transmission medium, a jacket which comprises a plastic material and which encloses the core, and a longitudinally extending water blocking laminate which is wrapped about the core between the core and the jacket. The laminate includes two microbial resistant tapes having a superabsorbent water swellable powder disposed therebetween. The powder is swellable upon contact with moisture to block entry of the moisture into said core and movement longitudinally along the cable. Each of the tapes has a thickness that is controlled to optimize the tensile strength of the tape and its porosity.

Also included in the water blocking laminate is an adhesive system. The adhesive system is effective to hold the powder in the laminate and yet not inhibit swelling of the powder upon contact with water.

Each of the tapes of the laminate may be a non-woven spunbonded web-like material which has a relatively high tensile strength and which is relatively thin. As a result, the use of the laminate does not unduly enlarge the cable. Further, each of the tapes has a suitable porosity.

## Brief Description of the Drawing

FIG. 1 is a perspective view of a communications cable having a sheath system which includes microbial resistant, water blocking provisions with layers of the sheath system broken away and some of the layers exaggerated in thickness for purposes of clarity ;

FIG. 2 is an end sectional view of the cable of FIG. 1 ;

FIG. 3 is a detail view of a portion of a preferred microbial resistant, water blocking laminate of this invention ;

FIG. 4 is a graph which depicts curves which illustrate the water blocking capability of the laminate of the cable of this invention as well as that property of a prior art laminate ; and

FIG. 5 is a detail view of a portion of an alternate embodiment of a microbial resistant water blocking laminate which may be included in the cable of FIG. 1.

## Detailed Description

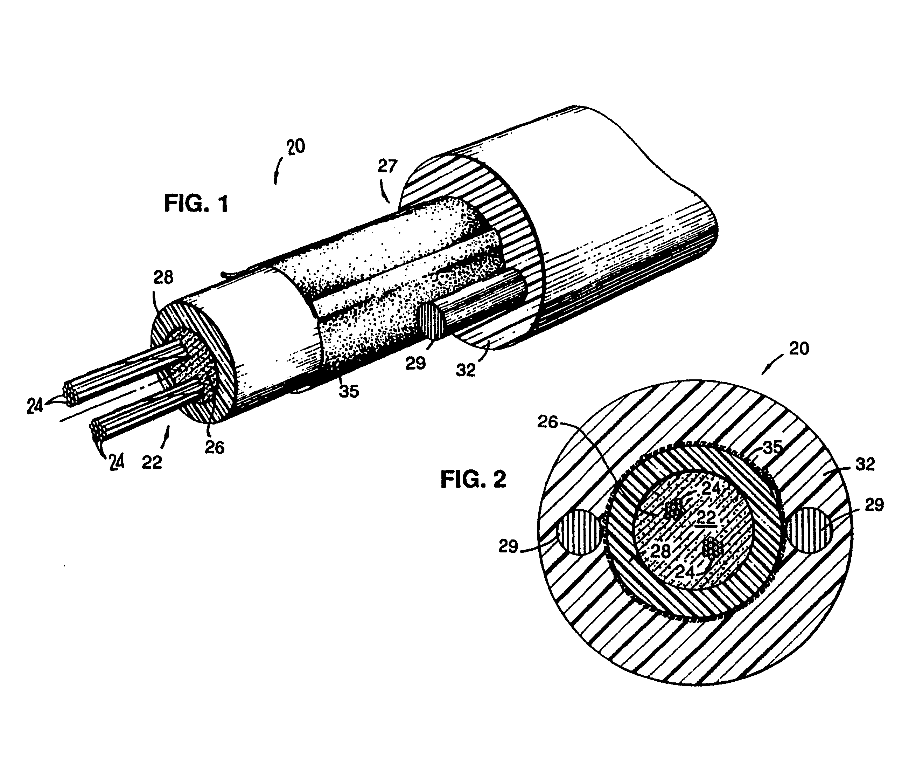

Referring now to FIGS. 1 and 2, there is shown a communications cable which is designated generally by the the numeral 20. It includes a core 22 comprising one or more optical fibers 24-24 and being filled with a material 26 such as that disclosed in U.S. patent 4,701,016. The core is enclosed by a sheath system 27 which includes a core tube 28 which encloses the optical fibers, two diametrically opposed strength members 29-29, and an outer jacket 32.

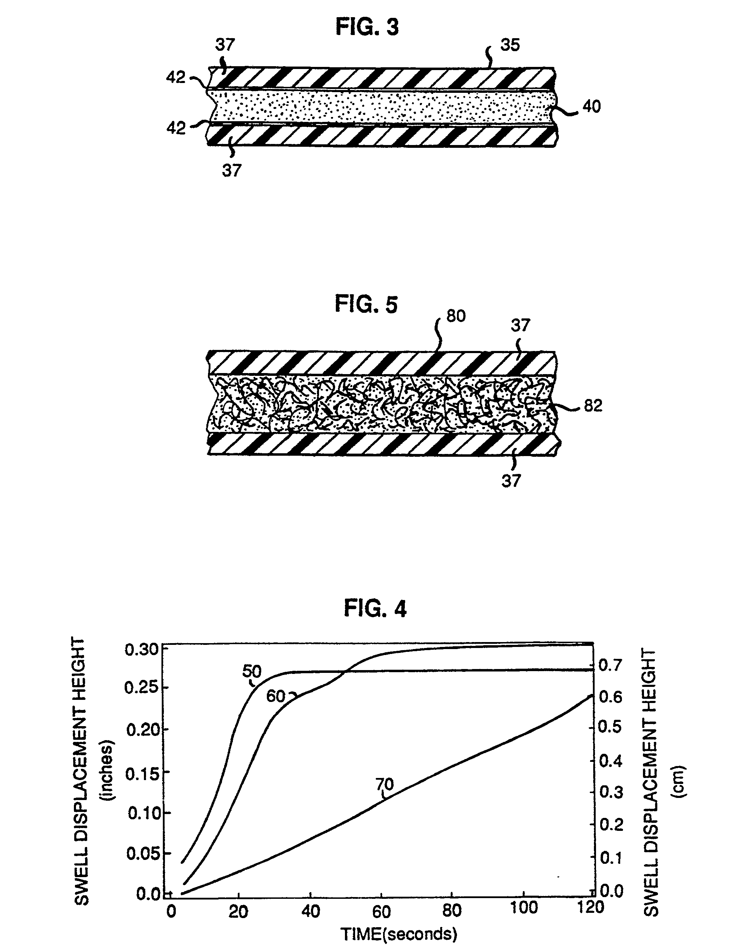

Disposed between the jacket 32 and the core tube 28 is a microbial resistant water blocking member which is designated generally by the numeral 35 (see also FIG. 3). The microbial resistant water blocking member 35 is a laminate comprising a pair of spaced apart microbial resistant substrate or carrier tapes 37-37 each of which is made of a hydrophobic material and between which is sandwiched a water blockable material. A hydrophobic material is one that has no affinity for water. Advantageously, the member 35 is hydrophobic.

In a preferred embodiment, each of the tapes 37-37 is comprised of a non-cellulosic material such as a spunbonded non-woven polyester material and includes a web structure comprised of randomly-arranged fibers which are bonded primarily at the filament crossovers. Continuity of the fibers of the web, while not necessary to the invention, will provide the web with an increased tensile strength. The fibers may be formed of any plastic resin, or other appropriate material, which is substantially nonhygroscopic, and which has the capability of maintaining its shape in the presence of the temperatures encountered during the extrusion of the jacket 32. The fibers of the web structure are arranged so that air cells or pockets are formed.

A polyethylene terephthalate fiber product, formed into a web structure as described above and suitable for use as a substrate tape 37 has been identified under the registered trademark "Reemay" is available in various thicknesses and densities from Reemay, Inc. of Old Hickory, Tennessee. The properties of Reemay® tapes are further defined and described in Bulletin R-1, dated March, 1986, entitled "Properties and Processing of Reemay® Spunbonded Polyester" from E. I. du Pont de Nemours and Company, Incorporated, Wilmington, Delaware.

Although in a preferred embodiment, spunbonded polyester tapes are used, others also are acceptable. For example, each of the tapes which are included in the laminated water blocking member 35 may be a nylon spunbonded fabric, non-woven glass, polypropylene melt blown non-woven fabric or, polyurethane spunbonded fabric, for example.

Advantageously, the carrier tape 37 of this invention also acts as a thermal barrier insofar as extrusion temperatures are concerned. As the jacket is extruded over the core, heat is available for transfer into the core. The water blocking member 35 of the cable 20 has the ability to insulate against the heat caused by the extrusion of the jacket.

Another important characteristic of the water blocking member 35 is its stiffness. It is important that the material be supple and flacid enough to conform readily to the contour of the outer surface of the core so that a minimal peripheral dimension is presented over which the plastic jacket is applied. Stiffness of the material for the tape 37 is controlled by a combination of factors such as the number of fibers per unit volume, thickness of the material, size of the fibers and the amount and type of binder used in the material.

In a preferred embodiment, the spunbonded polyester tape 37 combines the thermal, chemical and mechanical properties of polyester fibers with a spunbonded structure to provide a tape which is suitable for use in a communications cable. These properties include a relatively high tensile strength and elongation, excellent tear strength, and resistance to temperatures as high as about 400°F.

In order to render the substrate tape swellable upon contact with moisture, a suitable water swellable material and more specifically a superabsorbent material 40 (see FIG. 3) in powder form is disposed between the spaced apart substrate tapes 37-37. As will be recalled, the water blocking, spunbonded, non-woven tape laminate is designated with the numeral 35.

Superabsorbents are hydrophilic materials which can absorb and retain water under pressure without dissolution in the fluid being absorbed. See J. C. Djock and R. E. Klern "Review of Synthetic and Starch-Graft Copolymer Superabsorbents" prepared for the Absorbent Products Conference held November 16-17, 1983 in San Antonio, Texas and incorporated by reference hereinto. Properties such as absorbent capacity and rate of uptake are used to characterize a superabsorbent material. One of the early superabsorbents was a saponified starch graft polyacrylonitrile copolymer. See U.S. patent 3,425,971.

The two major superabsorbents which are available today are cellulosic or starch-graft copolymers and synthetic superabsorbents. Of course, in the cables of this invention, the superabsorbent materials which are used are microbial resistant. Accordingly, non-cellulosic superabsorbent materials are used. There are two major broad classes of synthetic superabsorbents. These are the polyelectrolytes and the nonelectrolytes. The polyelectrolytes are the most important and fall into four classes - polyacrylic acid superabsorbents, polymaleic anhydride-vinyl monomer superabsorbents, polyacrylonitrile-based superabsorbents and polyvinyl alcohol superabsorbents. Of these, the polyacrylic acid and polyacrylonitrile-based superabsorbents are most common. As with cellulosic-graft copolymer superabsorbents, the capacity of synthetic superabsorbents decreases with increasing salinity.

The polyacrylic acid class of superabsorbents includes both homopolymers and copolymers of acrylic acids and acrylate esters. The monomer units usually are polymerized to produce a water-soluble polymer which is then rendered insoluble by ionic and/or covalent cross-linking. Cross-linking of the polymer may be accomplished with a multivalent cation, radiation, or with a cross-linking agent. The absorbency of the product is determined by the number of ionizable groups, usually carboxylates, and the cross-linking density.

On contact with water or water-based liquid, the superbsorbent material 40 yields swollen gel particles. These form an impervious block and prevent further intrusion of the water into or along the cable.

In order to hold the superabsorbent powder 40 between the tapes 37-37, the inwardly facing surface of each substrate tape in a preferred embodiment is coated with a layer 42 of an adhesive material (see again FIG. 3). In the preferred embodiment, the adhesive material is a polypropylene adhesive film one or two sheets of which is inteposed between the powder and each substrate tape 37. As the tapes are laminated under suitable heat and pressure, the adhesive melts in place to retain the superabsorbent powder and adhere together or laminate both spunbonded non-woven tapes.

The carrier tape 37 also possesses specific properties such as porosity and thickness which enhance its use as a water blocking element for a cable, particularly for a communications cable. Of importance is the need for the tape to be made of a material which has a relatively high porosity. It has been found that the water blockability of the water blocking member increases as the porosity of the tapes increase. Porosity may be measured by air permeability in units of cubic feet per minute at a specified water pressure. At 124 Pa, typical porosities are in the range of about 1.8 to 5.1 $m^3$ /$m^2$.s. As a result, entering water contacts a substantial area of the material which is water blocking. There is a surprisingly fast reaction between the water blocking material and the water causing the water blocking material to swell and block off further longitudinal movement of the water along the cable.

Although the porosity of each substrate tape 37 is relatively high, that of the laminated water blocking member 35 is relatively low. As a result, if the tape 35 is disposed adjacent to the cable jacket, bleed-through of the molten jacket plastic does not occur

The porosity of the substrate tape 37 must be balanced against other properties. For example, because the tape is to be embodied in a cable ; it is beneficial for the tape to have a relatively high tensile strength. For a given tape width, the tensile strength decreases as the thickness decreases. Although a larger thickness is desired insofar as tensile strength is concerned, a larger thickness may result in less porosity, at least for those tapes which are available commercially. Therefore, these two properties must be balanced against each other to arrive at a final thickness.

Also if the tapes 37-37 are too porous, the superabsorbent powder may pass through the tapes and not be retained in the laminate. The powders must be trapped between the two spaced apart tapes 37-37. In some prior art applications, it is not uncommon to mist powder held between two tissue tapes to partially activate it and cause it to function as an adhesive. Then the powder is dried immediately after misting to freeze the growth. The powder is thereby formed into a flaked-like consistency which is effective to prevent the powder from passing through the tapes. But if the tapes have a high porosity such as the microbial resistant tapes 37-37 of this invention, misting may not be sufficient to cause the powder to be retained.

As can be seen, the porosity of the tape is important. It must be sufficiently high to allow the water to pass through but yet be suitable in cooperation with the adhesive system to retain the powder. In the preferred embodiment, the porosity is about 5.6 m³/m².s. Although in the preferred embodiment, each tape 37 has the same porosity, it is also possible to use two substrate tapes 37-37, one having a pososity which is greater than the other.

Viewing now the curves in FIG. 4, there are seen plots of swell displacement height in inches versus time in seconds for three water blocking members. A plot designated by the numeral 50 represents a water blocking member which comprises a laminate including a superabsorbent powder trapped between two tapes but which does not include microbial resistant materials. Curves designated 60 and 70 illustrates the swell behavior of water blocking members 35-35 of this invention. The curves of the test represent laminates exposed to distilled water which is a standard used in quality control tests of such laminates.

In order to move the curve 70 of the laminate of this invention to the left and increase the rate of rise to that such as in the curve 50, any one or more of three approaches can be taken. First, the loading of superabsorbent powder 40 between the two substrate tapes 37-37 can be increased. Secondly, the adhesion between the two tapes can be reduced so as not to inhibit the swellability of the laminate. Lastly, the superabsorbent powder 40 can be one which responds more quickly to contact with water. This last route is the most expensive. In the water blocking member represented by the curve 60, the adhesion between the substrate tapes 37-37 is less than that of the water blocking member represented by the curve 70.

As can be seen in FIG. 4, the water blocking member represented by the curve 50 has a somewhat faster response than that of the water blocking member 35 represented by the curve 60. This occurs because the tissue substrate material of the former swells upon contact with water. For the water blocking member 35 of this invention, the substrate tapes do not swell ; rather, swelling occurs after the water has passed through the tapes and contacted the superabsorbent mateiral. As a result, there is a slight delay before swelling begins to occur in the water blocking member of this invention.

The resistance of synthetic polymeric materials to fungus may be determined in accordance with test procedures set forth in ASTM Designation G 21-70. Water blocking members of this invention under evaluation were subjected to a twenty-one day test, which required visual evaluation of test specimens for signs of fungus growth at 7, 14 and 21 days of incubation. Each sample was inoculated with a composite spore suspension of fungi prior to their incubation in a controlled environment. At the time intervals specified, the samples were examined for fungus growth with the amount of fungus rated from 0 to 4 with 0 representing no fungus growth and 4 characteristic of the heaviest growth. In order that water blocking materials be characterized as non-nutritive to fungus, the water blocking material must be such that it does not support any fungus growth. The samples represented by the curves 60 and 70 received a 0 rating at each evaluation period indicating no fungus growth detected at any time during the test.

Another embodiment of the water blocking member 35 is depicted in FIG. 5. As shown, a water blocking member 80 includes two spaced apart tapes 37-37 with a material 82 disposed therebetween. The material 82 comprises a mixture of a superabsorbent powder and an adhesive material such as a hot melt, water based adhesive material.

It is to be understood that the above-described arrangements are simply illustrative of the invention. Other arrangements may be devised by those skilled in the art which will embody the principles of the invention and fall within the spirit and scope thereof.

**Claims**

1. A communications cable, which comprises a core comprising at least one transmission medium, a jacket which comprises a plastic material and which encloses said core, said cable being characterized in that

   a longitudinally extending laminate is disposed about said core between said core and said jacket, said laminate comprising :

   two microbial resistant based tapes each having a thickness that is controlled to optimize the tensile strength of said each tape and its porosity which is relatively high ;

   a microbial resistant superabsorbent material being disposed between said tapes and being swellable upon contact with water to block entry of the water into and movement longitudinally along the core ; and

   an adhesive system which is sufficient to hold together said tapes and to prevent said superabsorbent material from moving through said tapes without inhibiting the swelling of said superabsorbent material upon contact with water

2. The cable of claim 1, wherein said superabsorbent material comprises a superabsorbent powder.

3. The cable of claim 2, wherein the relatively high porosity of each of said tapes prior to the lamination thereof is in the range of about 5.6 m$^3$/m$^2$· s cfm at 124 Pa inch of water

4. The cable of claim 2, wherein each said tape prior to lamination thereof has a porosity in the range of about 5.6 m$^3$/m$^2$· s at 124 Pa.

5. The cable of claim 2, wherein interposed between an inwardly facing surface of each said substrate tape and said superabsorbent material is an adhesive material

6. The cable of claim 5, wherein said adhesive material is a polypropylene adhesive material.

7. The cable of claim 2, wherein each said tape comprises a tape made of a non-cellulosic material

8. The cable of claim 2, wherein a mixture comprising said superabsorbent material and said adhesive system is disposed between said tapes.

9. The cable of claim 8, wherein said adhesive system comprises a hot melt adhesive material

10. The cable of claim 2, wherein said superabsorbent powder is a powder selected from the group consisting of :
a. a polyacrylic acid based material ;
b. a polyacrylamide based material ;
c. blends of (a) and (b) ;
d. salts of (a) and (b) ; and
e. copolymers of (a) and (b).

FIG. 1

FIG. 2

EP 0 439 277 A1

EP 0 439 277 A1

## FIG. 3

## FIG. 5

## FIG. 4

SWELL DISPLACEMENT HEIGHT (inches)

SWELL DISPLACEMENT HEIGHT (cm)

TIME(seconds)

9

European Patent Office

**EUROPEAN SEARCH REPORT**

Application Number

| | DOCUMENTS CONSIDERED TO BE RELEVANT | | EP 91300352.1 |
|---|---|---|---|
| Category | Citation of document with indication, where appropriate, of relevant passages | Relevant to claim | CLASSIFICATION OF THE APPLICATION (Int. Cl.5) |
| P,X | EP - A1 - 0 361 863 (AMER. TEL. & TEL.) * Column 5, line 22 - column 10, line 43; fig. 1,2,7,8 * | 1-4,10 | H 01 B 7/28 G 02 B 6/44 |
| Y | JP - A - 62-231 064 (KANAI) * Claims; fig. 1 * & DATABASE WPIL, DERWENT PUBLICATIONS LTD., London, GB no. 87-324 734 concerning to said JP-A-62-231 064 | 1,10 | |
| Y | EP - A2 - 0 351 100 (AMER. TEL. & TEL.) * Abstract; column 5, line 35 - column 6, line 57; column 9, lines 33-43; fig. 1,2 * | 1,10 | |
| A | PATENT ABSTRACTS OF JAPAN, unexamined applications, P field, vol. 11, no. 331, October 29, 1987 THE PATENT OFFICE JAPANESE GOVERNMENT page 140 P 630 * Kokai-No. 62-115 109 (FUJIKURA) * | 1 | TECHNICAL FIELDS SEARCHED (Int. Cl.5) H 01 B 7/00 G 02 B 6/00 |

The present search report has been drawn up for all claims

| Place of search | Date of completion of the search | Examiner |
|---|---|---|
| VIENNA | 19-03-1991 | KUTZELNIGG |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document